# DEMANDE DE BREVET EUROPEEN

(11) **EP 2 108 496 A1**
(43) Date de publication de la demande: **14.10.2009**
(21) Numéro de dépôt: 08370009.6
(22) Date de dépôt: 09.04.2008
(51) Int. Cl.: B29B 17/00

(54) **Dispositif de compactage de récipients**

(71) Demandeur: Delattre, Jean-Yves, 59134 Fournes en Weppes (FR)
(72) Inventeur: Delattre, Jean-Yves, 59134 Fournes en Weppes (FR)

(57) **Abrégé**

L'invention concerne un dispositif électrique de compactage de récipients ou de contenants souples (3). Le dispositif comprend un organe d'aspiration permettant d'extraire l'air contenu dans le récipient pour réaliser le vide à l'intérieur de ce dernier. Cet organe d'aspiration est constitué d'une turbine (12) entrainée par un moteur électrique (33). Un collecteur (2) apte à assurer l'étanchéité entre le récipient et l'appareil est solidaire de ce dernier. Une fonction commande (10), apte à délivrer au moteur, une tension ou une fréquence variable en fonction du temps, de façon à générer les courbes présélectionnées de débit et de pression, dans le but d'optimiser le compactage tout en réduisant le bruit généré par l'implosion du récipient.
Des moyens de présélection (4) de la courbe de compactage assurent la mise en servie l'appareil.

En outre, l'invention concerne également un dispositif de compactage constitué d'une partie frontale (43) amovible, comprenant les moyens d'aspiration.

Applications aux appareils, notamment le petit électroménager, pour le compactage de récipients de type bouteille dans le cadre du tri sélectif.

## Description

La présente invention concerne un dispositif de compactage de récipients ou de contenants souples.

L'invention permettra notamment de réduire le volume de ces récipients et contenants dès lors que ceux-ci auront été vidés de leur contenu.

La présente invention s'applique au domaine des emballages jetables.

Elle vise en particulier à réduire les volumes de stockage et de transport de ces déchets.

Les modes de consommation modernes ont amené à augmenter de façon considérable le nombre et la diversité de ces récipients utilisés pour l'alimentaire, les produits d'entretien ménagers, les produits d'entretien et de maintenance industriels et automobile.

A l'heure actuelle, on connaît plusieurs types d'appareils dont le principe est fondé sur l'aspiration de l'air contenu dans lesdits récipients.

Des applications mettent en oeuvre un adaptateur raccordé à un aspirateur ménager telle que décrites dans la publication FR2846951.
On connaît des dispositifs d'aspiration au moyen d'une pompe à vide tel que décrit dans la publication FR2822750.
On connaît également un appareil portable équipé d'une pompe à palettes tel que décrit dans la publication DE 199 39 018 A1.

D'autres principes de compactage ont été développés et font appel à des systèmes mécaniques, à commande manuelle ou motorisée.

Ces dispositifs comportent différents inconvénients. Il faut tout d'abord remarquer que la mise en oeuvre est particulièrement longue. Par ailleurs certains dispositifs ne sont absolument pas ergonomiques et demandent à l'utilisateur de fournir des efforts importants. D'autres ne permettent pas de tenir correctement, en particulier avec les deux mains, les contenants pendant la phase de compression. Les résidus restant dans les contenants, en particulier le sucre, vont se déposer sur les organes d'aspiration et rapidement réduire les caractéristiques de ces appareils voire les bloquer. En outre la conception du dispositif doit permettre un nettoyage aisé et sans risques d'électrocution.
De plus les liquides résiduels aspirés par l'appareil ne sont pas évacués et vont stagner dans les zones de rétention.

D'autres principes consistant à compacter un ensemble de récipients dans un container ont été développés.

Ils présentent l'inconvénient d'être encombrants et d'un coût élevé. De plus ce concept nécessite une opération de remplissage de ce container compacteur, puis de transfert des récipients vers le container à déchets.

Ces moyens présentent en outre des risques de blessure en cas de présence de verre, mais aussi de risque pour les animaux domestiques.

La présente invention a pour but de remédier à ces différents inconvénients, les principaux objectifs, non exhaustifs, consistant à concevoir un dispositif de compactage par aspiration de l'air contenu dans les récipients et contenants souples, qui limite le bruit généré par ces récipients et contenants lors de la phase de compactage de ces derniers, permettant un nettoyage aisé des résidus aspirés dans l'appareil, ne nécessitant aucun efforts pour l'utilisateur, et de mise en oeuvre rapide.

A ce titre l'invention concerne un dispositif de compactage de récipients ou de contenants souples. Le dispositif comprend un organe d'aspiration permettant d'extraire l'air contenu dans le récipient ou le contenant, pour réaliser le vide à l'intérieur de ce dernier. Cet organe d'aspiration est constitué d'une turbine entrainée par un moteur électrique. Cette turbine est constituée d'une roue munie d'ailettes, qui évacuent l'air du récipient, sous l'effet de la rotation à grande vitesse. Ce moteur est asservi à une fonction électronique de commande, qui détermine les séquences et les vitesses dudit moteur en fonction du choix établi par l'utilisateur. Le dispositif comprend également un collecteur lié à l'organe d'aspiration et muni d'un joint assurant l'étanchéité entre le récipient et l'organe d'aspiration.

L'utilisation d'une turbine, entrainée par un moteur électrique, pour réaliser l'aspiration présente pour avantage de pouvoir extraire très rapidement l'air contenu dans le récipient. Par ailleurs le niveau de dépression, dès lors que l'air a été extrait du récipient va croitre de façon important et provoquer l'écrasement du récipient. En outre, la turbine ou roue n'étant pas en contact avec sa volute, il n'y a pas d'usure, ni de perte des caractéristiques de l'appareil dans le temps.

La turbine et son moteur d'entrainement sont placés dans des compartiments séparés. En outre, un joint d'étanchéité placé entre ces compartiments protège le moteur contre les infiltrations de liquides. Par ailleurs un dispositif amovible de récupération des résidus liquides ou solides, provenant de l'aspiration et placé sous la turbine.

Le collecteur constitué d'un support recouvert d'un matériau souple, apte à assurer l'étanchéité entre le récipient le dispositif d'aspiration est solidaire de l'appareil de compactage.

En outre, l'invention concerne également un dispositif de compactage de récipients ou de contenants souples constitué d'un boitier, comprenant le moteur, et d'une partie frontale amovible, comprenant la turbine et les moyens collecteur. Le démontage aisé de cette partie frontale permet le nettoyage de la turbine et des moyens collecteur, par exemple sous l'eau.

Le vide relatif ainsi créé dans le récipient assurera le compactage desdits récipients par écart de pression entre l'intérieur et l'extérieur de ces derniers.

Cette conception nouvelle et avantageuse permet en particulier de réaliser le compactage sans effort de tous types de récipients sans limite de forme ni de taille et de volume.

L'invention a également l'avantage de réaliser ce compactage quasi instantanément. La réalisation de l'invention à également l'avantage d'être de petites dimensions et son utilisation se fera dans d'excellentes conditions d'ergonomie.

L'invention trouvera son application aussi bien pour l'usage domestique que collectif et a pour but de réduire de façon significative le volume des récipients.

L'invention sera mieux comprise au vu des planches de dessins situés en annexe et qui comprennent :
- La figure 1 illustrant un schéma de principe.
- Les figure 2 à 5 montrant une vue éclatée d'un exemple de réalisation.

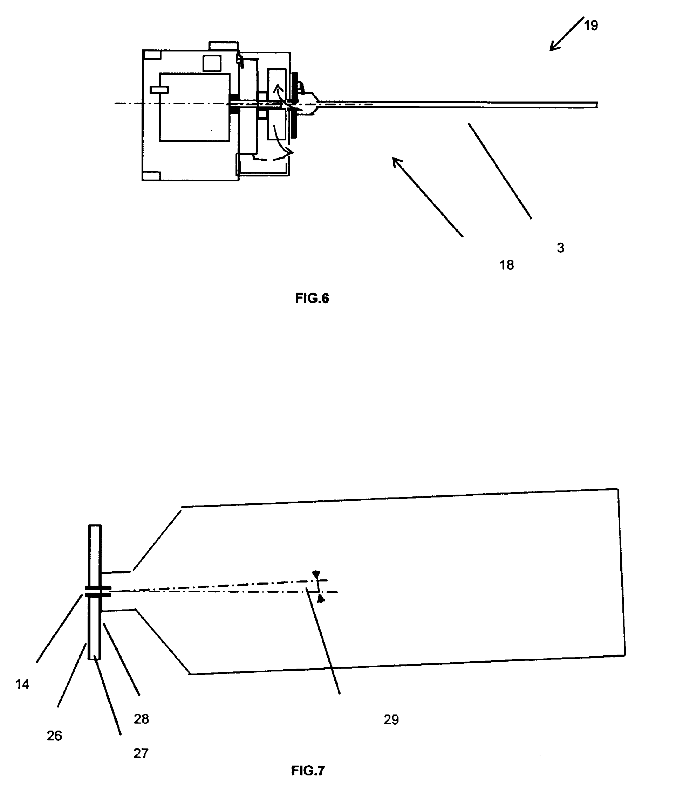

- La figure 6 montrant un récipient en fin de compactage.
- La figure 7 montrant un schéma de principe d'un collecteur bi matière munis d'un revêtement d'étanchéité.
- Les figure 8 et 9 montrant des schémas de principe d'un collecteur munis d'un revêtement d'étanchéité.
- La figure 10 représentant une vue schématique d'un régulateur de débit.
- Les figure 11 à14 présentant des courbes de consigne, de débit et de pression.

L'invention concerne un dispositif électrique de compactage de récipients ou de contenants souples (3) par aspiration et génération de vide caractérisé en ce qu'il comprend :
- un boitier (15) comprenant:
   - un moteur d'entrainement (33);
   - des moyens de commande (4) et/ou des moyens de détection de présence (5) du récipient reliés aux moyens d'asservissements (10) assurant la mise en fonctionnement de l'appareil ;
   - des moyens d'asservissement (10), agissant sur la tension d'alimentation ou la fréquence du moteur électrique (33), de façon à générer des courbes de variation du débit d'aspiration (20) et du niveau de vide (21) en fonction du temps ;
   - un joint étanche (13), protégeant le moteur contre les infiltrations de liquides;
   - des fonctions de protections, telles que fusible, et des moyens (17) de coupure de l'alimentation du moteur en cas de surchauffe lors d'une utilisation prolongée.
- une partie frontale (43) comprenant :
   - des moyens de génération de vide (34) comprenant:
      - la turbine (12) constitué d'une roue (45) munie d'ailettes (46);
      - des moyens amovibles de récupération de liquide (6);
      - des moyens collecteurs (2) constitués d'un support (26) sur lequel est fixé un matériau souple d'étanchéité (27), de type mousse polyuréthane, apte à subir des enfoncements importants, sur lequel est fixé en tout ou partie un revêtement (28) souple et de forte élasticité qui assure une parfaite étanchéité avec le récipient (3);
      - les moyens collecteurs comprenant un orifice de passage d'air (14) de diamètre réduit par rapport au diamètre de l'ouverture du récipient et prédéterminé pour assurer une limitation du débit;
      - un filtre anti- intrusion (7) assure la protection du dispositif d'aspiration.

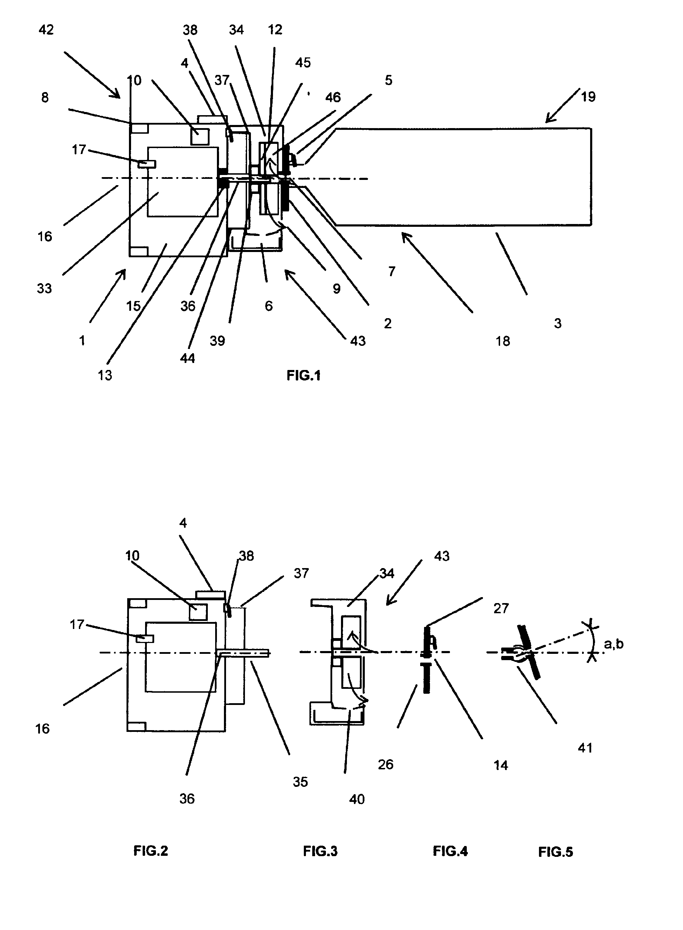

Selon le mode de réalisation illustré par les figures 2 et 3, la partie frontale (43) est amovible. Selon cette variante le boitier (15) comprend, en plus de l'application décrite plus haut:
- des moyens de reprise de guidage et d'entrainement (36) de la turbine (12);
- des moyens de centrage et de fixation (37) de la partie frontale (43);
- des moyens de contrôle de présence (38), en position sur le boitier (15) de la partie frontale;
   La partie frontale (43) comprend, en plus de l'application décrite plus haut:

- des moyens de guidage en rotation (39) de la turbine;

Dans les deux cas, le collecteur (2), fixé sur la partie frontale peut être droit comme illustré en figure 4, ou orientable dans l'espace selon les angles a et b, comme le montre la figure 5.

Selon une autre variante, la variation au début de l'aspiration, du débit de l'air extrait du récipient est réalisée au moyen d'éléments mécaniques. Par exemple, d'un piston mobile (22), régulateur de débit d'air dans l'orifice (14), contraint par un ressort (24), placé dans une chambre (23) débouchant par un conduit (25) dans l'orifice (14).

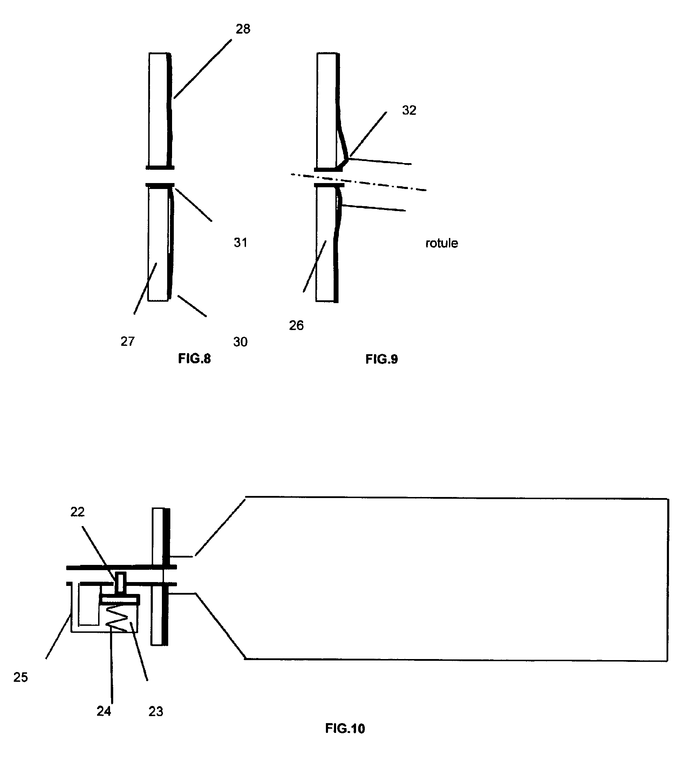

Des variantes dans la réalisation de la fonction étanchéité, entre le récipient et l'appareil de compactage sont illustrées par les figures 8 et 9.
- le revêtement (28) est fixé au matériau souple (27) sur sa périphérie (30) et dans la zone d'aspiration (31) afin que, lors de l'aspiration, il se plaque automatiquement par la dépression contre l'orifice (32) du récipient (3).
- les moyens collecteurs (2) comprennent un support (26) sur lequel est fixé, sur sa périphérie (30) uniquement, et dans la zone d'aspiration (31), un revêtement (28) souple et de forte élasticité pour assurer une parfaite étanchéité avec le récipient (3).

Le calcul suivant montre à titre indicatif les efforts mis en jeu par le vide. L'extraction de l'air contenu dans un récipient créera un vide à l'intérieur de ce dernier. L'invention porte en particulier sur les moyens de réalisation de cette extraction d'air et de la génération de vide. Elle vise notamment à réduire les nuisances sonores et à adapter au mieux la vitesse d'extraction de l'air en fonction du récipient ou du contenant souple à compacter. Pour cela l'invention présente l'avantage de présenter différentes courbes d'extraction de l'air, ces courbes étant choisies par l'utilisation en fonction de la nature du récipient, en particulier la matière constitutive de ce dernier. L'effort appliqué sur les parois du récipient sera le produit de l'écart des pressions exercées entre les surfaces intérieures et extérieures de ce dernier par sa surface. On notera bien que la présente invention ne requière pas un niveau de vide maximum pour sa mise en oeuvre. Cependant pour définir un ordre de grandeur, on prendra comme exemple les efforts appliqués sur une bouteille. Pour un diamètre de huit centimètres et une hauteur de vingt centimètres, la surface sera d'environ cinq cents centimètres carré. Dans l'hypothèse d'un écart de pression maximum de un bar entre l'intérieur et l'extérieur du récipient l'effort appliqué sera de cinq mille newton. Les efforts mis en jeu sont considérables. On comprend mieux que la présente invention permet de compacter sans effort tous les objets tel que bouteilles en plastique quelqu'un soit l'épaisseur, des boites d'emballage et bien d'autre objets.

La présente invention permet une mise en oeuvre de l'opération de compactage en prédéterminant par les paramètres de réalisation, le débit d'extraction de l'air, sa variation en fonction du temps, le niveau de vide, sa variation en fonction du temps, et le temps de fonctionnement.

On notera que l'écrasement des récipients réalisés selon la présente invention ne nécessite pas de replacer le bouchon après compactage. Le récipient étant détruit dans sa structure. La remise en place du bouchon après compactage n'améliorera que très faiblement le résultat du taux de compactage.

Il est à noter, et pour définir un ordre de grandeur, que le volume résiduel du récipient correspondra environ au cinquième du volume initial et cela pour un niveau de vide nettement inférieur à celui cité dans l'exemple.

La présente invention dans sa réalisation sera compacte et pourra s'intégrer aux objets de la vie quotidienne.
Il ressort de la présente description que le compacteur selon l'invention est d'une conception peu coûteuse mettant en oeuvre des composants facilement réalisables. Le coût de ce compacteur sera donc limité.
L'usage de l'appareil peut se faire aussi bien chez les particuliers que dans les entreprises et les collectivités.

L'invention comporte un collecteur (2) lié à la partie frontale (43) sur lequel est fixé un matériau souple (27) assurant l'étanchéité entre et l'appareil et le récipient (3). Par ailleurs un ou plusieurs boutons de commande (4) disposés sur le boitier (15) ou un détecteur de présence (5) situé sur la partie frontale assurent la mise en service de l'appareil.
Le récipient (3) est placé manuellement contre le joint du collecteur (2) et maintenu en position pendant la phase de compactage. Un filtre anti- intrusion (7) assurant la protection du dispositif d'aspiration.

Le mode opératoire est le suivant :

Prendre le récipient après avoir ôté le bouchon ou ouvert l'opercule de fermeture.
Le placer contre l'embout du collecteur.
Appuyer sur un des boutons poussoir .Cette action n'est pas nécessaire dans le cas de détection automatique de la présence du récipient par le détecteur.
La compression s'effectue très rapidement.
Il est possible de remettre le bouchon.
Le récipient peut être jeté.

Le bouton de commande (4) ou de détecteur de présence (5) agissent sur le moteur (33) par l'intermédiaire d'une fonction commande (10).
Le détecteur (5) solidaire de la partie frontale est placé dans un compartiment étanche. Il peut par exemple être à fonctionnement mécanique, ou pneumatique voire électrique. La continuité électrique entre le détecteur et la fonction commande est assurée lors de la mise place de la partie frontale sur le boitier (15) au moyen de touches conductrices.
Cette fonction commande permet un grand nombre de modes de fonctionnement.

On peut citer de façon non exhaustive quelques exemples de séquences:

Une impulsion brève sur ce bouton de commande permet de mettre en service l'appareil, la durée de fonctionnement étant alors asservie à une temporisation prédéterminée, à titre indicatif de 2 à 3 secondes.
Cette temporisation peut dans certains cas, par exemple pour un fonctionnement continu, être un temps plus long, par exemple d'une minute.
Une impulsion brève sur le bouton de commande pour la mise en marche puis une seconde impulsion pour l'arrêt de l'appareil.
Une action sur le bouton de commande pendant toute la durée de fonctionnement de l'appareil.

On peut envisager selon une variante, que la mise en marche automatique de l'appareil soit assurée tant que le détecteur (5) signale la présence d'un récipient.
Selon une variante, la mise en marche automatique de l'appareil dès que le détecteur (5) signale la présence d'un récipient, suivie d'une durée de fonctionnement temporisée.

Cette fonction commande permet également, dans le but de réduire le bruit et le choc provoqués par l'implosion du récipient, de faire varier en fonction du temps la tension ou la fréquence appliquées au moteur (33), de façon à faire varier des valeurs de débit et de pression en fonction du temps selon les courbes caractéristiques de l'appareil.

En outre des courbes prédéterminées peuvent être utilisées et sélectionnées par différents boutons de commande. Une représentation visuelle sur ces boutons, par exemple par des pictogrammes représentant différentes tailles de bouteilles, permet une sélection aisée.

Dans une réalisation préférée de l'invention la position horizontale des récipients pour le compactage présente de nombreux avantages.

Les récipients étant uniquement basculés à l'horizontal, on comprend bien que les liquides résiduels qui pourraient s'y trouver ne pourront pas s'en échapper.
En outre un dispositif d'orientation (41) du collecteur permet d'adapter dans l'espace le basculement du récipient selon le souhait de l'utilisateur.

Cela limitera les salissures de l'appareil ainsi que l'introduction de liquides dans ce dernier.

La mise en place et le maintien des récipients seront particulièrement aisés.

De façon à améliorer l'efficacité du compactage, il peut être utile d'assurer un maintien préférentiel du récipient pendant et en fin de compactage (18). Une légère action sur ce dernier (19) permet, par exemple, de basculer le fond du récipient en fin de compactage.

La disposition de l'appareil sur un plan de travail, face arrière (16) appuyée contre un mur permet en particulier de reprendre les efforts exercés par le récipient sur le boîtier (15) et permet une bonne position ergonomique pour l'utilisateur.

Selon un autre mode, le boitier (15) est maintenu sur un support (42) au moyen d'éléments de fixations. Des orifices de passage (8) de ces moyens de fixation étant pratiqués dans le boitier (15).

L'aspiration et la génération de vide sont réalisées par une turbine (12) entraînée par un moteur (33).
On notera que la turbine (12) et le moteur (33) peuvent être isolés par un joint étanche (13).Le moteur sera protégé contre toute aspiration de liquide.
Les moyens de récupération amovibles de liquide (6) placé dans la partie frontale permettent de récupérer le liquide en cas de manoeuvre inopinée avec un récipient rempli. Ces moyens sont par exemple constitués d'un bac coulissant placé sous la turbine, apte à récupérer par ruissellement les liquides aspirés. Dans une variante le dispositif de récupération des liquides est vissé sous la partie frontale. En outre ces moyens de collecte sont munis d'un dispositif de contrôle du niveau des liquides résiduels, soit visuel par exemple par transparence des matériaux dudit moyen, soit par détecteur de niveau.

Selon un mode particulier la partie frontale (43) est amovible. Le boitier (15) restant par exemple fixé sur un support, alors que la partie frontale sera passée sous l'eau dans le but de la nettoyer.

Dans ce cas la partie frontale comporte des moyens de guidage en rotation (39) de la turbine (12). Un moyen d'entrainement et de reprise de guidage (36) est solidaire du moteur électrique.

Le montage de la partie frontale (43) sur le boitier (15) est réalisé par un centrage à jeu réduit (37) et un dispositif de blocage, par exemple par rotation de la partie frontale (43) sur le centrage (37) et encliquetage des doigts de maintien (44).

La fonction commande (10) selon l'invention doit en particulier résoudre le problème du niveau sonore généré lors de la compression de certains récipients.

Ce niveau sonore dépend principalement des matériaux utilisés pour la confection des récipients ainsi que de la vitesse de compactage.

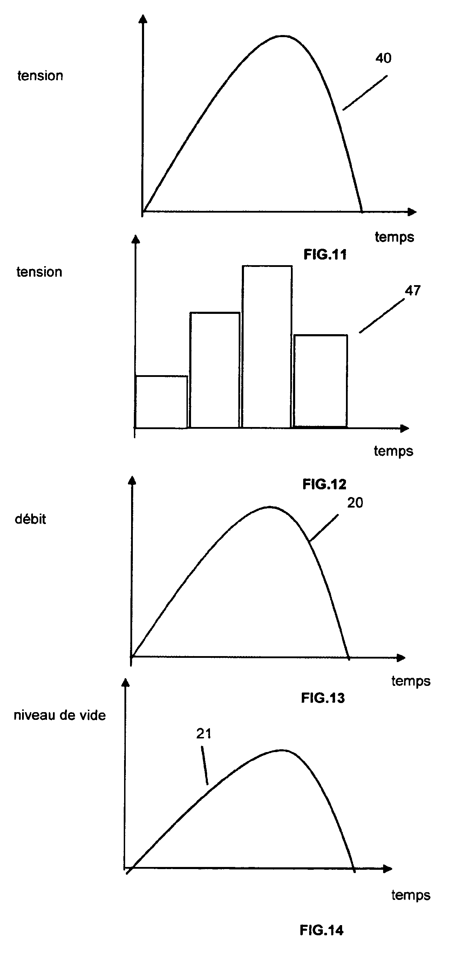

La vitesse de compactage dépend du débit d'extraction de l'air contenu dans le récipient. Le taux de compactage réalisé dépend du niveau de vide exercé en fin de compactage.
Comme montré par la courbe 20 (Fig.13) le débit d'air extrait du récipient varie en fonction du temps. La vitesse de compactage sera fonction de cette courbe et agit en outre sur le niveau sonore. Le compactage peut couramment être réalisé entre 1 et 5 secondes pour un récipient de 2 litres.
La fonction commande applique au moteur une tension variable selon une courbe prédéterminée (40). La consigne peut aussi bien avoir une variation continue, qu'être constituée par des paliers successifs (47). On peut tout aussi bien agir sur la fréquence d'alimentation du moteur.

De même la courbe 21 montre un exemple de variation du niveau de vide en fonction du temps.

La détermination des caractéristiques dimensionnelles des composants de l'appareil de compactage intervient également dans les caractéristiques principales que sont la vitesse d'extraction et le niveau de vide final.

Selon un mode de réalisation simplifié, les asservissements de consigne du moteur peuvent être supprimés. Dans ce cas le diamètre de l'orifice de passage d'air (14) sera réduit et déterminé pour assurer une limitation du débit.

Selon une variante de ce mode de réalisation le débit d'extraction du récipient au travers l'orifice de passage d'air (14) est régulé de façon progressive en fonction du temps. La section de passage de l'air évoluera par pilotage de pression.

Un piston mobile (22) se déplace par évacuation de l'air contenu dans la chambre (23). Ce piston est à l'état initial placé en buté par l'intermédiaire d'un ressort (24).

Lors de la mise en service de l'appareil un faible débit va permettre par l'intermédiaire d'un orifice (25) de déplacer progressivement le piston (22) par augmentation du niveau de vide dans la chambre (23) et augmenter le débit d'air extrait du récipient (3).

Le collecteur (2) selon l'invention assure la fonction étanchéité entre l'appareil proprement dit et le récipient (3).

Le collecteur est constitué d'un support (26) sur lequel est fixé un matériau souple (27), apte à subir des enfoncements importants, par exemple une mousse polyuréthane basse densité. Un revêtement (28) souple et de forte élasticité est fixé sur ce matériau.

Cette réalisation multicouche autorise un fort écart angulaire (29) dans la mise en place du récipient. Les déformations du récipient pendant la compression et en particulier l'impact sur le goulot seront compensées par le matériau souple (27).

Il est à noter que le vide relatif crée dans le récipient exerce un effort de placage de ce dernier contre le collecteur.

Dans une variante le revêtement (28) n'est pas solidaire du matériau souple (27).
La fixation du revêtement est assurée sur sa périphérie (30) et dans la zone d'aspiration (31). Lors de l'aspiration il se plaquera automatiquement par la dépression contre l'orifice (32) du récipient et garantira une parfaite étanchéité pendant toute la durée du compactage.

Une autre variante est caractérisée par le fait que le collecteur (2) est constitué d'un support (26) est d'un revêtement (28) dont la fixation est assurée sur sa périphérie (30) et dans la zone d'aspiration (31).

Un orifice (9) réalisé dans la partie frontale (43), permet l'évacuation de l'air extrait du récipient.

L'appareil selon l'invention sera utilisé par intermittence et pendant des périodes courtes dans la majorité des cas. Cependant, une utilisation en rafale est possible, il conviendra de disposer un dispositif de coupure (17) de l'alimentation du moteur en cas de surchauffe.

L'appareil dispose également des fonctions de protections électriques, telle que fusible. Par ailleurs une isolation phonique de l'appareil permettra de garantir un confort d'utilisation.

## Revendications

1. Dispositif électrique de compactage de récipients ou de contenants souples (3), comprenant un organe d'aspiration, permettant d'extraire l'air contenu dans le récipient pour réaliser le vide à l'intérieur de ce dernier. Cet organe d'aspiration est constitué d'une turbine (12) entrainée par un moteur électrique (33). La turbine est constituée d'une roue (45), munie d'ailettes (46), qui évacuent l'air, du récipient, sous l'effet, de la rotation à grande vitesse.
La turbine et son moteur d'entrainement sont placés dans des compartiments séparés, le moteur étant protégé contre les infiltrations de liquides par un joint d'étanchéité (13) placé entre ces compartiments. Un dispositif amovible (6) de récupération des résidus liquides ou solides, provenant de l'aspiration est placé sous la turbine.
Le collecteur (2) constitué d'un support (26) recouvert d'un matériau souple (27) apte à assurer l'étanchéité entre le récipient et le dispositif d'aspiration est solidaire de l'appareil de compactage.

2. Dispositif selon la revendication 1, **caractérisé en ce que** le moteur électrique (33) des moyens d'aspiration et de génération de vide est relié par une fonction commande (10), apte à délivrer une tension ou une fréquence variable en fonction du temps selon une courbe (40) ou des paliers successifs (47), de façon à générer les courbes présélectionnées de débit et de pression (20, 21), dans le but d'optimiser le compactage tout en réduisant le bruit généré par l'implosion du récipient.

3. Dispositif selon les revendications 1 et 2 **caractérisé en ce que** la mise en service de l'appareil, le choix de la courbe de compactage, ainsi que la durée et la séquence de fonctionnement sont effectués par des moyens de présélection (4).

4. Dispositif selon les revendications 1 et 2, **caractérisé en ce que** la mise en service, le choix de la courbe de compactage, ainsi que la séquence et la durée de fonctionnement de l'appareil sont effectués automatiquement par les moyens de détection (5) qui contrôlent la présence du récipient à proximité de l'appareil.

5. Dispositif selon l'une quelconque des revendications précédentes, **caractérisé en ce que** la partie frontale (43) qui comprend les moyens de génération de vide (12) et les moyens collecteurs (2) est amovible pour la nettoyer, par exemple sous l'eau.

6. Dispositif selon la revendication 5, **caractérisé en ce que** la partie frontale (43) est fixée sur le boitier (15) au moyen d'un centrage (37) assurant un parfait alignement entre les axes du moteur et de la turbine.

7. Dispositif selon la revendication 6, **caractérisé en ce que** la mise en place correcte de la partie frontale (43) est contrôlée par un capteur (38) qui autorise la mise en fonctionnement du moteur.

8. Dispositif selon l'une quelconque des revendications 1 à 7 **caractérisé en ce que** les moyens collecteurs (2) comprennent un support (26) sur lequel est fixé un matériau souple d'étanchéité (27), apte à subir des enfoncements importants. Sur ce dernier est fixé un revêtement (28) souple et de forte élasticité qui assure une parfaite étanchéité avec le récipient (3).

9. Dispositif selon l'une quelconque des revendications 1 à 8 **caractérisé en ce que** les moyens collecteur (2) sont orientables dans l'espace selon les angles a et b.
